# EUROPEAN PATENT SPECIFICATION

(11) **EP 3 532 756 B1**
(45) Date of publication and mention of the grant of the patent: **29.07.2020**
(21) Application number: 17790820.9
(22) Date of filing: 19.10.2017
(51) Int. Cl.: F16K 17/196, F16K 17/36, F16K 24/00, B60K 15/035

(54) **FUEL TANK PRESSURE RELIEF VALVE**
KRAFTSTOFFBEHÄLTER MIT DRUCKENTLASTUNGSVENTIL
VANNE DE SURPRESSION DE RÉSERVOIR DE CARBURANT

(30) Priority: 26.10.2016 GB 201618072
(43) Date of publication of application: 04.09.2019
(73) Proprietor: Fairfax 3d Design Limited, Horsforth, Leeds LS18 5SZ (GB)
(72) Inventor: POULTER, Trevor John, Horsforth Leeds West Yorkshire LS18 5SZ (GB)
(74) Representative: Aldridge, Christopher Simon
(86) International application number: PCT/GB2017/053162
(87) International publication number: WO 2018/078338

(56) References cited:
- US-A- 3 937 358
- US-A- 4 705 065
- US-A- 5 524 662
- US-A1- 2006 225 794
- US-A1- 2011 056 938

## Description

### TECHNICAL FIELD

The present invention relates to fuel tank pressure relief valves for relieving both over-pressure and under-pressure in a fuel tank, and more particularly, but not exclusively, to fuel tank pressure relief valves with emergency locking in the event of roll-over.

### BACKGROUND

Petrol, diesel and other liquid fuels are commonly distributed in fuel tankers, for example road tankers. Fuel tankers are typically compartmentalised into several separate fuel tanks. For the purposes of safety, one or more valve assemblies are commonly provided on each fuel tank having a positive pressure valve that opens to relieve excessively high pressure (e.g. tank pressure more than 80mBar above ambient), and additionally a negative pressure valve that opens to relieve excessively low pressure (e.g. tank pressure more than 10mBar below ambient). Pressure beneath ambient is colloquially referred to as "vacuum", and valve assemblies for relieving both over-pressure and under-pressure in a fuel tank are also referred to as relieving "pressure and vacuum". Commonly the positive pressure and negative pressure valves are arranged side by side. Each of the positive pressure and negative pressure valves is provided with a sealing element and a seating that mate to form a seal between the interior and exterior of the fuel tank.

Scheduled testing of tankers requires the removal of the valve assemblies from each fuel tank, to enable the tank to be tested at a positive pressure (e.g. 500mBar) that exceeds the over-pressure relief threshold. Each valve assembly also requires testing after replacement. Accordingly, testing all of the fuel tanks of a multi-compartment fuel tanker is a complex and costly operation taking several hours, requiring handling of the valve assemblies, which risks introducing damage to them.

The sealing surfaces of the sealing elements and seatings are sensitive to the presence of dirt, which can impair the quality of the seal that is formed when in the closed configuration.

A known fuel tank pressure relief valve comprising all the features described in the preamble of claim 1 is disclosed in US 3,937,358.

### SUMMARY OF THE DISCLOSURE

According to a first aspect, there is provided a fuel tank pressure relief valve for relieving a pressure difference between the interior pressure of a fuel tank and an exterior pressure external to the fuel tank, comprising:
first and second sealing surfaces for mating to form an openable seal between the interior and exterior of the fuel tank;
a housing provided with the first sealing surface;
a first plunger;
a second plunger; and
a venting port,
wherein the first plunger is provided with the second sealing surface, wherein the first plunger is flexibly sealed to the housing by a first membrane providing a first diaphragm area to open the seal formed between the first and second sealing surfaces when the interior pressure is above the exterior pressure by more than a first threshold differential pressure;
wherein the second plunger is flexibly sealed to the housing by a second membrane providing a second diaphragm area that is greater than the first diaphragm area, wherein the second plunger is engaged with the first plunger to bias the first plunger towards an open configuration of the first and second sealing surfaces when the interior pressure is lower than the exterior pressure to open the seal formed between the first and second sealing surfaces when the interior pressure is lower than the exterior pressure by more than a second threshold differential pressure; and
wherein the first plunger is biased towards a closed configuration of the first and second sealing surfaces by a resiliently deformable member to maintain the seal formed between the first and second sealing surfaces in a closed configuration when the interior pressure is not above the exterior pressure by more than a first threshold differential pressure and is not lower than the exterior pressure by more than a second threshold differential pressure.

According to a second aspect, there is a fuel tank or a fuel tanker comprising one or more fuel tank pressure relief valves of the first aspect.

A reference chamber may be provided between the first diaphragm and the second diaphragm that is open to the venting port.

A response chamber may be provided on the opposite side of the first diaphragm from the reference chamber, and the response chamber may be in fluid communication with the interior of the fuel tank.

The response chamber may be in fluid communication with the interior of the fuel tank through a flow constricting conduit.

The second plunger may comprise a spindle slideably engaged through an exterior pressure conduit of the first plunger, and the reference chamber may be in fluid communication with the venting port through the exterior pressure conduit.

The second plunger may comprise a hollow tube providing exterior pressure conduit, and the reference chamber may be in fluid communication with the venting port through the exterior pressure conduit.

The first diaphragm area may be larger than the area within the sealing surface of the openable seal.

The first plunger may be resiliently biased into the closed configuration

The first plunger may be slideably engaged with the housing.

The second plunger may be slideably engaged with the first plunger

The second plunger may comprise a spindle slideably engaged through the first plunger.

A surface of the second plunger facing the first plunger may be a concave surface,
wherein a reference chamber may be provided between the first diaphragm and the second diaphragm and the reference chamber is less deep proximate the edge of the reference chamber than in a central region of the reference chamber, and
a jamming ball may be provided in the reference chamber with a larger diameter than the depth of the reference chamber adjacent the edge of the reference chamber to maintain the seal formed between the first and second sealing surfaces in a closed configuration when the relief valve is inclined by more than a threshold angle with respect to the earth's gravitational pull.

The surface of the second plunger facing the first plunger may be a conic surface.

The surface of the second plunger facing the first plunger may slope by up to 20 degrees on each side of a central region.

A surface of the first plunger facing the second plunger may comprise a recessed central region.

A surface of the second plunger facing the first plunger may comprise a recessed central region.

A surface of the first plunger and/or a surface of the second plunger facing into the reference chamber may comprise an annular groove proximate the periphery of the reference chamber. A surface of the first plunger and/or a surface of the second plunger facing into the reference chamber may comprise a plurality of concentric annular grooves.

The second sealing surface may comprise a resiliently deformable ring.

The resiliently deformable ring may have a low friction coating.

The low friction coating may be a PTFE encapsulation.

The first sealing surface may be provided on a removable baffle sandwiched between separable housing parts.

### DESCRIPTION OF THE DRAWINGS

Examples of the invention are further described hereinafter with reference to the accompanying drawings, in which:
- Figure 1A shows a cut-away view of a fuel tank pressure relief valve in a closed configuration when the internal tank pressure is equal to the external pressure;
- Figure 1B shows a further cut-away view of the valve of Figure 1A in the closed configuration when the internal tank pressure is equal to the external pressure;
- Figure 2 shows a cut-away view of the valve of Figure 1A in a first open configuration when the internal tank pressure is higher than the external pressure;
- Figure 3 shows a cut-away view of the valve of Figure 1A in a second open configuration when the internal tank pressure is lower than the external pressure;
- Figure 4 shows a cut-away view of the valve of Figure 1A in a closed configuration when the tank is in a rollover orientation;
- Figure 5 shows a cut-away view of the valve of Figure 1A in a forced open configuration to enable fuel to be drained out of the tank;
- Figure 6 shows a cut-away view of the valve of Figure 1A in a locked closed configuration for pressure testing of the tank;
- Figure 7A shows a cut-away view of a further fuel tank pressure relief valve in a closed configuration when the internal tank pressure is equal to the external pressure;
- Figure 7B shows a further cut-away view of the valve of Figure 7A in the closed configuration when the internal tank pressure is equal to the external pressure; and
- Figure 8 shows a cut-away view of the valve of Figure 7A in a closed configuration when the tank is in a rollover orientation.

### DETAILED DESCRIPTION

In the described examples, like features have been identified with like numerals, albeit in some cases having one or more of: increments of integer multiples of 100. For example, in different figures, 100 and 700 have been used to indicate a fuel tank pressure relief valve.

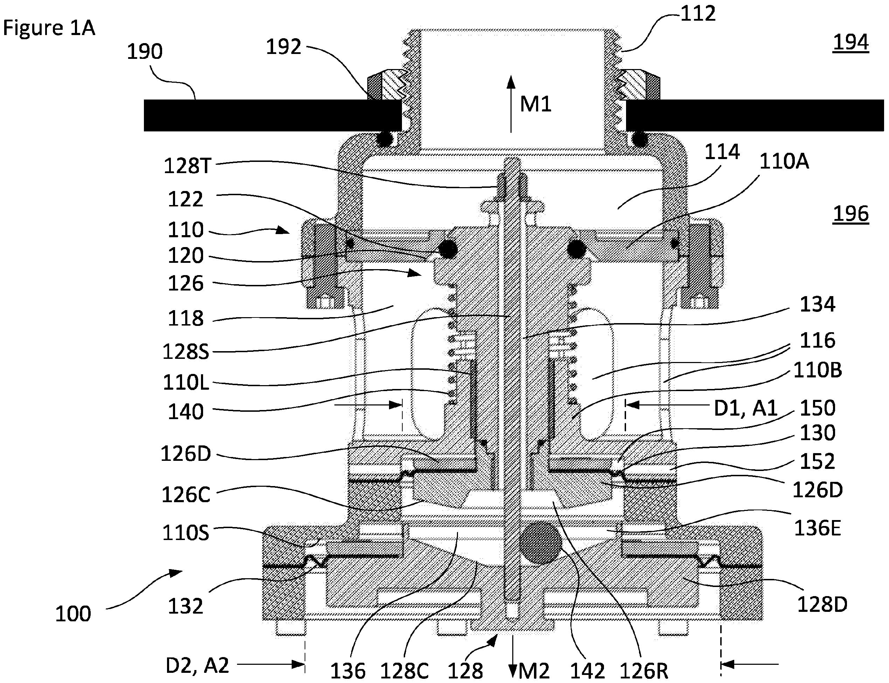

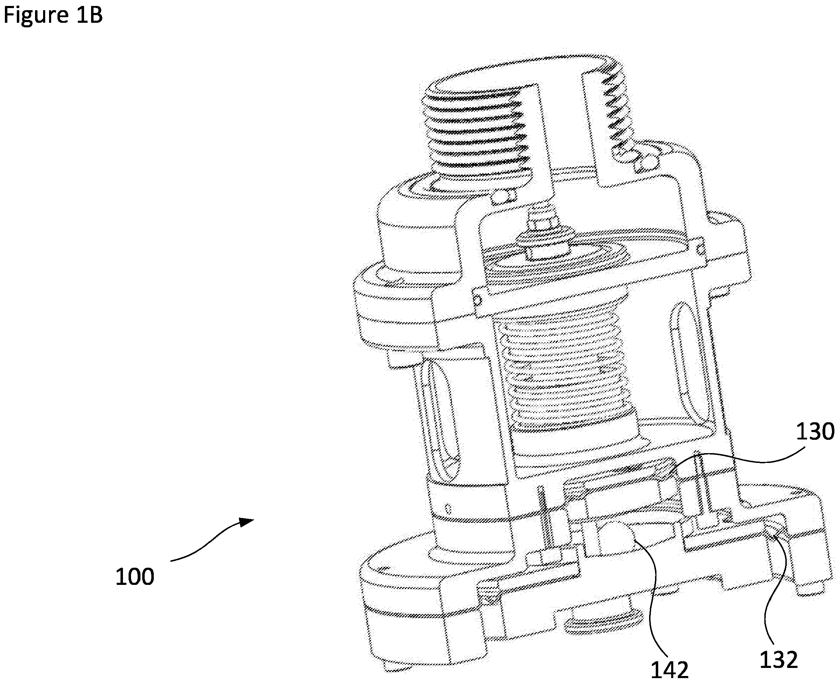

Figures 1A shows a cut-away view of a fuel tank pressure relief valve 100 in a closed, rest configuration, mounted to an aperture 192 in the wall of a fuel tank 190 for liquid fuel. Figure 1B shows a perspective, cut-away view of the fuel tank pressure relief valve 100 of Figure 1A.

The valve 100 has a housing 110 providing fluid communication between the exterior 194 and the interior 196 of the fuel tank 190, when in an open condition of the valve. The wall aperture 192 to which the valve 100 is mounted may be part of an openable hatch in the main wall of the tank 190, e.g. a hatch covering a port that is historically known as the "fill hole". Fluid communication between the exterior 194 and the interior 196 is subject to the opening and closing of a seal formed between first and second sealing surfaces 120 and 122. The first sealing surface 120 is provided by a seal seating formed on a baffle 110A of the housing 110. The second sealing surface 122 is provided on a first plunger 126, moveable in a closure direction M1 towards the first sealing surface 120, and moveable in an opening direction M2 away from the first sealing surface.

The first plunger 126 and a second plunger 128 are provided within the housing 110. The first plunger 126 has a first diaphragm section 126D that is sealed to the housing 110 by a first resiliently deformable membrane 130, forming a first diaphragm having a first surface area A1 (i.e. the area of both the exposed portion of the first resiliently deformable membrane 130 and the first diaphragm portion 126D of the first plunger 126 that are free to move within the housing 110). The side of the first resiliently deformable membrane 130 facing towards closure direction M1 (towards the sealing surfaces 120 and 122, being the upper surface, in Figure 1A) is exposed to the interior pressure of the tank 190.

The internal space of the housing 110 is partitioned into a venting chamber 114 between the venting port 112 and the seal formed by the first and second sealing surface 120, 122, a central chamber 118 that is exposed to the interior tank pressure through apertures 116 in the housing, a response chamber 150, and a reference chamber 136 (which may alternatively be referred to as a control chamber).

The response chamber 150 is formed between the housing and the first resiliently deformable membrane 130 (above the lower surface of membrane 130, in Figure 1A), on the opposite side of the first resiliently deformable membrane from the reference chamber 136. The response chamber 150 is in fluid communication with the interior 196 of the tank 190, so that the pressure within the response chamber changes in response to changes in the interior tank pressure. The response chamber 150 is coupled to the interior 196 of the tank 190 by one or more interior pressure balancing conduits 152. Alternatively, the response chamber 150 may be coupled to the interior of the tank by one or more apertures providing rapid pressure equalisation between the response chamber and the interior of the tank (not shown).

The second plunger 128 is sealed to the housing 110 by a second resiliently deformable membrane 132, forming a second diaphragm having a second surface area A2 (i.e. the area of both the exposed part of the second resiliently deformable membrane 132 and the second diaphragm portion 128D of the second plunger 128 that are free to move within the housing 110). The side of the second resiliently deformable membrane 132 facing into the reference chamber 136, e.g. towards the sealing surfaces 120 and 122 (upper surface of membrane 132, in Figure 1A), is exposed to the pressure exterior to the tank 190. The opposite side of the second resiliently deformable membrane 132 from the reference chamber 136 is exposed to the pressure in the interior 196 of the tank 190.

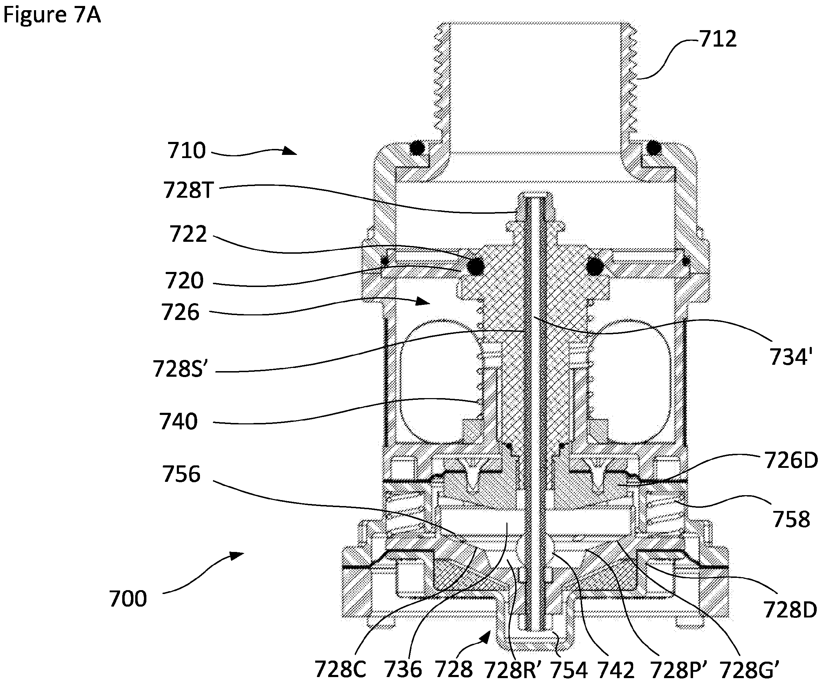

An external pressure balancing conduit 134 connects from the exterior pressure (e.g. ambient atmospheric pressure) to the reference chamber 136, which is between the first resiliently deformable membrane 130 (beneath the lower surface of membrane 130, in Figure 1A) and the second resiliently deformable membrane 132. In the illustrated valve 100, the external pressure balancing conduit 134 extends through the first plunger 126 from beyond the second sealing surface 122, between the exterior of the shaft 128S of the second plunger 128 and the interior of the first plunger 126. Alternatively, the external pressure balancing conduit may be provided by a conduit of the housing (not illustrated) that is separate from the first plunger 126. In a further alternative, the shaft of the second plunger may be a tube and the external pressure balancing conduit may extend along within the shaft of the second plunger, e.g. in the arrangement of the further fuel tank pressure relief valve 700 shown in Figure 7A, or with a tubular shaft having an aperture through its wall that provides fluid communication directly into the reference chamber 136.

The first plunger 126 is resiliently biased towards the first sealing surface 120, e.g. in the closure direction M1. In the illustrated valve 100, the first plunger 126 is resiliently biased, against the housing 110, by a spring 140. In the illustrated valve 100, the first plunger 126 is slideably engaged through a bracket 110B of the housing 110, with an intervening low friction bushing 110L. The first plunger 126 passes through the spring 140, and opposite ends of the spring respectively press against the housing bracket 110B and the first plunger.

In the illustrated valve 100, the interior of the housing 110 is circular in cross-section, having a first diameter D1 defining the first surface area A1, where the first resiliently deformable membrane 130 connects to the housing, and having a second diameter D2 defining the second surface area A2, where the second resiliently deformable membrane 132 connects to the housing.

The membranes 130, 132 may be a fluorosilicone membranes, or may be coated with chemically resistant coatings (e.g. fluorosilicone coatings) to resist degradation through contact with liquid fuel or fuel vapour.

The second plunger 128 is coupled to the first plunger 126 to restrict the movement of the first plunger in the closure direction M1 relative to the second plunger. In the illustrated valve 100, the second plunger 128 has a second diaphragm portion 128D, from which a shaft 128S extends that slideably engages through the first plunger 126 to a travel limiter 128T.

The travel of the second plunger 128 in the closure direction M1 is limited by the housing 110. In the illustrated the valve 100, in the at rest position illustrated in Figure 1A, the main body portion of the second plunger 128 is proximate or resting against a shoulder 110S of the housing 110, which limits the travel of the second plunger in the closure direction M1.

In ordinary use, when the pressure in the interior 196 of the tank 190 is equal to the pressure external to the tank, the valve 100 is in the rest configuration illustrated in Figure 1A. In the rest configuration, the second sealing surface 122 on the first plunger 126 is biased against the first sealing surface 120 by the spring 140, with the travel of the first plunger uninhibited by the second plunger 128, causing fluid communication between the interior 196 and exterior 194 of the tank 190 to be closed.

In the illustrated valve 100, the first plunger 126 is slideably engaged through a bracket 110B of the housing 110, for linear movement of the first plunger relative to the housing. However, the first plunger may have an alternative engagement with the housing, for example with the first plunger being pivotably connected to the housing (e.g. with the first plunger having an arm extending transversely to the direction of movement that is pivotably connected to the housing). In the illustrated valve 100, the second plunger 128 is slideably engaged through the first plunger 126, for linear movement of the second plunger relative to the first plunger. However, the second plunger may have an alternative engagement with the first plunger and/or the housing, for example with the second plunger being pivotably connected to the housing and/or pivotably connected to the first plunger.

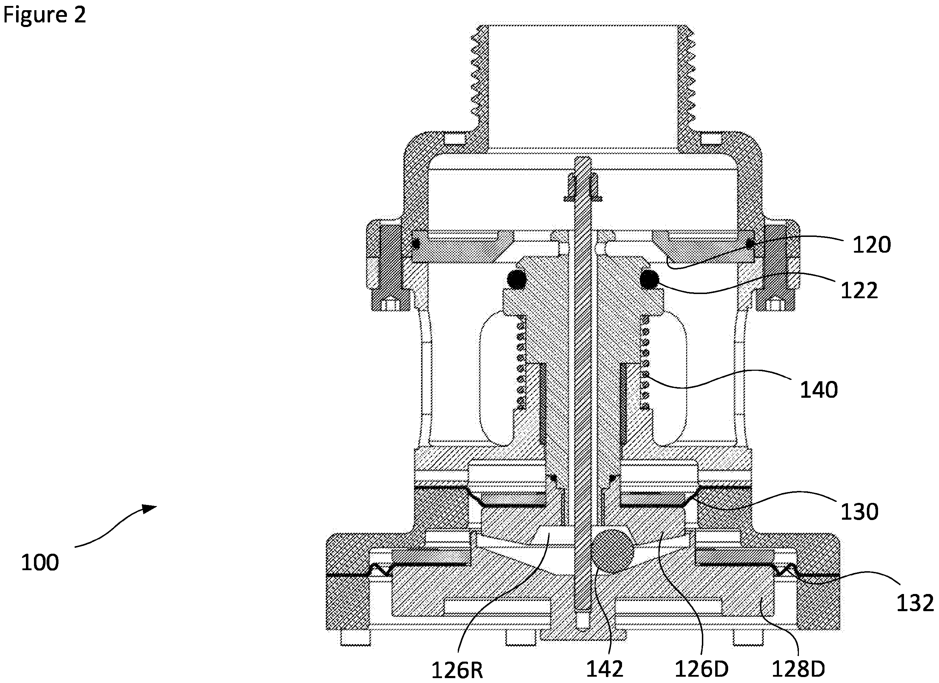

Figure 2 illustrates an over-pressure open configuration of the valve 100, when the pressure of the interior 196 of the tank 190 exceeds the pressure of the interior 194 by more than a first threshold pressure difference, i.e. a high pressure relief configuration. The first diaphragm, formed by the first resiliently deformable membrane 130 and the adjacent portion of first plunger 126 are exposed to the elevated interior pressure on the side facing towards the closure direction M1, and on the opposite side of the first diaphragm they are exposed to the exterior pressure present within the reference chamber 136. This pressure difference across the first diaphragm causes the first plunger 126 to move against the bias of the spring 140, in the opening direction M2, deforming the first resiliently deformable membrane 130, and separating the first and second sealing surfaces 120 and 122, opening the fluid communication between the interior 196 and exterior 194 of the tank 190, and enabling venting out of the tank (e.g. venting out excess fuel vapour) through the venting port 112. Meanwhile, an equal and oppositely orientated pressure difference is present across the second diaphragm (formed by the second resiliently deformable membrane 132 and the adjacent second diaphragm portion 128D of the second plunger 128), pushing the second plunger in the closure direction, where its travel is limited by contacting the shoulder 110S of the housing 110, without inhibiting the movement of the first plunger 126.

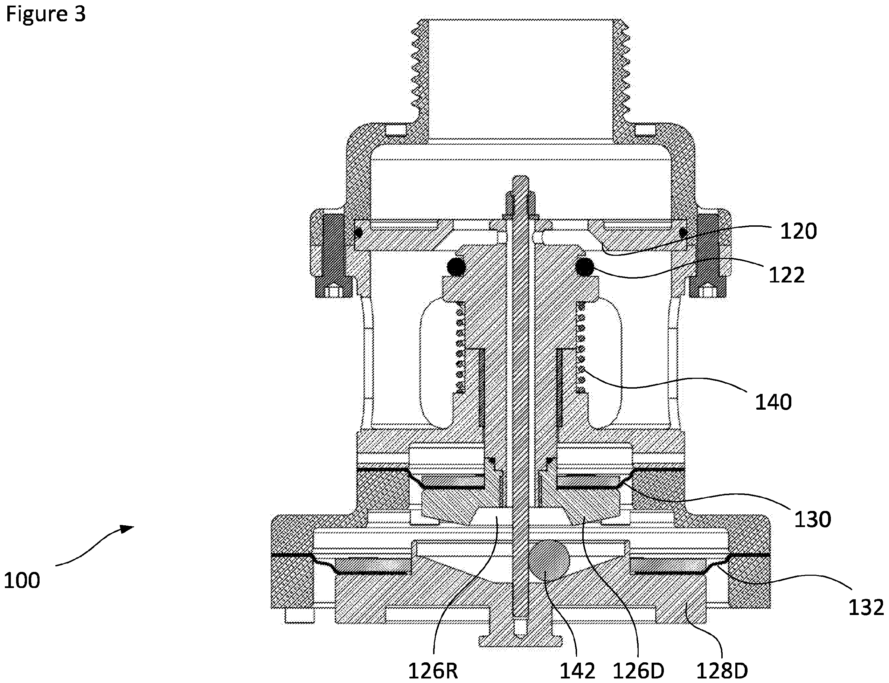

Figure 3 illustrates an under-pressure open configuration of the valve, when the pressure of the interior 196 of the tank 190 is below the pressure of the interior 194 by more than a second threshold pressure difference, i.e. a low pressure relief configuration (colloquially referred to as "vacuum" relief). The second diaphragm, formed by the second resiliently deformable membrane 132 and the adjacent second diaphragm portion 128D of the second plunger 128 are exposed to the reduced interior pressure on the side facing towards the closure direction M1 of the sealing surfaces 120, 122, and on the opposite side of the second diaphragm they are exposed to the exterior pressure present within the reference chamber 136. This pressure difference across the second diaphragm causes the second plunger 128 to move in the opening direction M2, and to deform the resiliently deformable second membrane 132. The travel limiter 128T on the shaft 128S of the second plunger 128 bears against the first plunger 126.

Contrary to the open configuration of the valve 100 illustrated in Figure 2, the pressure difference across the first diaphragm presses the first plunger towards the closed direction M1. However, since the area of the second diaphragm is greater than that of the first diaphragm, once the second plunger 128 bears against the first plunger 126 the net force experienced due to the pressure difference is dominated by the force on the second diaphragm, which is directed in the opening direction M2. When this net force is sufficient to overcome the biasing force of the spring 140, the second plunger 128 forces the first plunger 126 to move against the spring 140, drawing the second sealing surface 122 away from first sealing surface 120, opening the fluid communication between the interior 196 and exterior 194 of the tank 190, and enabling venting into the tank (e.g. venting in of air from the exterior).

The application of pressure differentials across diaphragms with a larger area than is defined by the mating surface of the first and second sealing surfaces provides a mechanical advantage that enables the seal to open in response to a small pressure difference between the interior and exterior of a tank, whilst enabling increased closure force of the seal in the closed condition, compared with a seal in which the pressure differential acts across only an area defined by the sealing surface. The increased closure force may enhance the sealing performance of the seal, including reducing vulnerability to leakage caused by dirt. The increased closure force may enable the use of a more powerful closure spring in the as manufactured valve, reducing vulnerability to spring wear in use (e.g. work hardening), so increasing the operational lifetime of the valve. The increased closure force may also increase reliability, reducing the requirement to provide redundant valves.

The use of two diaphragms of different sizes, connected to respective plungers, with the second plunger that is connected to the larger diaphragm being able to force the first plunger into an open configuration enables the opening and closing of a single seal to vent both over-pressure and under-pressure. This reduces the number of seals required compared with devices in which separate seals vent over-pressure and under-pressure. Reducing the number of seals and valve members required to reliably vent both over-pressure and under-pressure enables higher specification seals to be used, whilst maintaining commercial viability of the valve.

The provision of the reference chamber within the valve that is in coupled to the exterior of the tank provides a fail-safe valve, since if either of the diaphragm membranes were to fail, the interior of the chamber would become coupled to the exterior through the exterior pressure balancing conduit.

As in the illustrated valve 100, the one or more interior pressure balancing conduits 152 may have a relatively long, narrow shape that constricts the flow of fluid between the response chamber 150 and the interior 196 of the tank 190, slowing the pressure equalisation between the interior of the tank and the response chamber. The interior pressure balancing conduits 152 may have a diameter of 1 to 3 mm and a length of 5 to 15 mm. In the illustrated valve, interior pressure balancing conduits 152 have a diameter of 2 mm and a length of 10 mm.

The illustrated interior pressure balancing conduit slows the pressure equalisation between the interior of the tank and the opposite side of the first membrane from the reference chamber, damping the pressure response within the response chamber to pressure changes within the interior of the tank. This damped response time reduces the susceptibility of the valve to "hunting", in which a valve repeatedly opens and closes during pressure relief (e.g. when the tank is being filled), which may accordingly reduce valve wear and extend valve lifetime.

The baffle 110A that provides the first sealing surface 120 may be sandwiched between separable parts of the housing 110, and may be a replaceable part.

The provision of a replaceable baffle sandwiched between separable parts of the housing may enable the baffle to be replaced during valve servicing, to provide a fresh sealing surface for the seal.

The second sealing surface 122 may be provided by a resiliently deformable ring (e.g. an elastomeric ring, known as an "O-ring"), received into a recess of the first plunger, as in the illustrated valve 100. The second sealing surface 122 may have a surface coating, which may be a low-friction surface coating. For example, the second sealing surface may be provided by a PTFE encapsulated resiliently deformable ring. Alternatively, the first sealing surface may be provided by a resiliently deformable ring received into a recess in the housing baffle, and a tapered surface of the first plunger may providing a second sealing surface with which it mates to form a seal (not illustrated).

The provision of the second sealing surface by a resiliently deformable ring enables the second sealing surface to be easily replaced during valve servicing. A low-friction surface coating reduces sticking between the first and second sealing surfaces. Further, a surface coating may protect the second sealing surface from degradation through contact with the liquid fuel or fuel vapour.

The reference chamber 136, between the first diaphragm section 126D of the first plunger 126 and the second diaphragm section 128D of the second plunger 128, is provided with a rollover protection mechanism. In the illustrated valve 100, the reference chamber 136 has a non-constant depth (in the direction parallel to the shaft 128S) within which a jamming ball 142 is provided. In particular, the separation between the first diaphragm section 126D of the first plunger and the second diaphragm section 128D of the second plunger 128 is greater in the centre of the reference chamber 136 (e.g. adjacent the shaft 128S) than at the periphery of the reference chamber. In the illustrated valve 100, facing into the reference chamber 136, the diaphragm section 128D of the second plunger 128 is provided with a concave surface 128C (e.g. a first conical surface). The concave surface 128C may have a slope of 20 degrees at least proximate the edge 136E of the reference chamber 136. In ordinary use, the valve 100 is orientated with the concave surface 128C facing upwards, as shown in Figure 1A, and under the force due to gravity, the jamming ball 142 rests at a low point, spaced away from the edge of the reference chamber 136 (e.g. centrally, adjacent the shaft 128S). The depth of the reference chamber 136 is smaller at the edge of the reference chamber. Facing into the reference chamber 136, the convex surface 126C of the first diaphragm section 126D is convergent with the facing concave surface 128C, towards the edge 136E of the reference chamber 136 (e.g. flat or provided with a less steeply sloped surface, e.g. conical surface 126C). Further, in the illustrated valve 100, facing into the reference chamber 136, the surface of the first diaphragm section 126D is provided with a recess 126R, spaced apart from the edge 136E of the reference chamber.

Figures 1A to 3 illustrate the arrangements of the reference chamber 136 and jamming ball 142 in normal use configurations. When the valve 100 is in the closed rest configuration of Figure 1A, the jamming ball 142 is free to roam around within the reference chamber 136, as the tank 190 is subject to movement during normal use. However, by the force due to gravity, the jamming ball 142 is drawn to a low point of the concave surface 128C. In the event of over-pressure within the main body of the tank 190 surrounding the valve 100, the first plunger 126 opens the seal between the first and second sealing surfaces 120, 122, with the jamming ball 142 partially entering the recess 126R, to allow unhindered movement of the first plunger. In the event of under-pressure within the main body of the tank 190 surrounding the valve 100, the second plunger 128 draws the first plunger 126 away from the first sealing surface, whilst maintaining the depth of the reference chamber 136 (i.e. the jamming ball 142 does not hinder the opening of the seal between the sealing surfaces 120, 122).

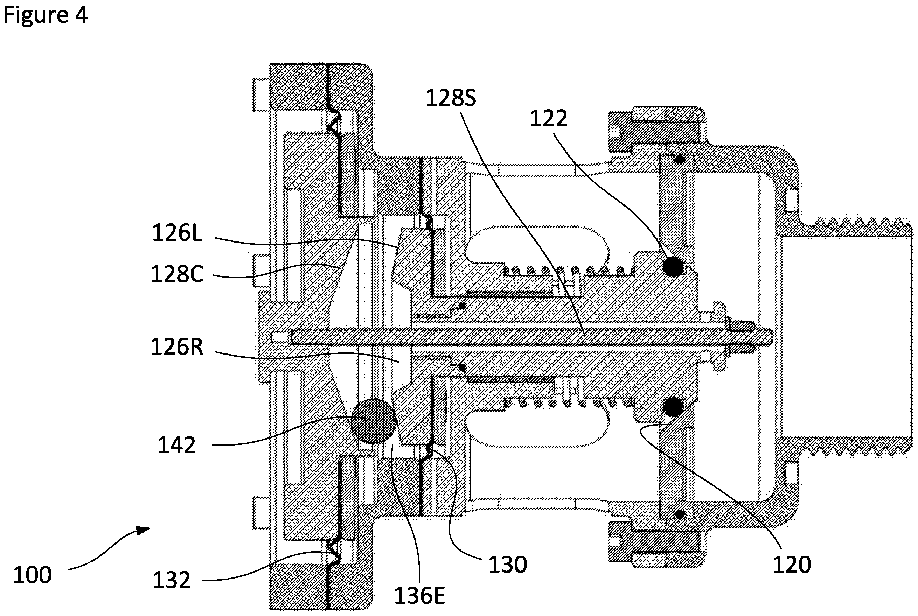

Figure 4 illustrates the arrangement of the reference chamber 136 and jamming ball 142 in a 90 degree rollover configuration. This orientation of the valve 100 would arise if a fuel tanker rolled onto its side in a road-traffic accident. When the valve 100 is rotated away from the normal use configurations by more than a jamming threshold angle (e.g. corresponding to the slope of the concave surface (128C), the jamming ball 142 rolls away from its rest position of the normal use configurations (e.g. rolls away from the shaft 126S), towards the edge 136E of the reference chamber 136, where it jams between the first plunger 126 and the second plunger 128. When the tank rolls sufficiently that the valve becomes submerged in the liquid fuel, the valve is exposed to an elevated pressure, and the larger area of the second diaphragm than the first diaphragm forces the second plunger 128 against the jamming ball 142, preventing the first plunger 126 from moving and opening the seal between the first and second sealing surfaces 120, 122.

One or both of the facing surfaces 126C and 128C of the first and second diaphragm sections 126D and 128D may additionally be provided with an annular groove (not shown) proximate the edge 136E of the reference chamber 136, into which the jamming ball 142 is received when the valve 100 rolls over. The annular groove further secures the jammed jamming ball 142 against being squeezed out towards the shaft 128S, and so assists with securely locking the seal into the closed configuration. In a further alternative, a plurality of concentric annular grooves (not shown) may be provided in the facing concave and/or convex surfaces of the diaphragm sections 126D and 128D, distributed at radii that lie between the periphery of the recess 126R and the edge 136E of the reference chamber 136. Where annular grooves are provided on both facing surfaces 126C and 128C, they may be arranged at corresponding radii, so that a corresponding pair of facing annular grooves may receive opposite sides of the jamming ball 142. Radially from the shaft 128S, the one or more grooves may have a depth profile with a radius of curvature equal to the radius of the jamming ball 142.

The surface of the first diaphragm section 126D of the first plunger and the facing concave surface 128C of the second plunger 128, facing into the reference chamber 136, towards the edge 136E of the reference chamber 136 converge to provide a depth that is less than the diameter of the jamming ball 142, when the reference chamber has its maximum depth. In the event of a rollover condition, this enables the jamming ball 142 to jam between the first plunger 126 and second plunger 128 (e.g. without bouncing off the side of the inside of housing 110) when the valve 100 rotates and the jamming ball rolls out towards the edge 136E of the reference chamber 136, which may enhance locking the seal into the closed configuration.

The angle of convergence between the surface of the first diaphragm section 126D of the first plunger 126 and the facing concave surface 128C of the second diaphragm section 128D of the second plunger 128, both facing into the reference chamber 136, may be less than 15 degrees (e.g. 8 degrees, in the illustrated valve).

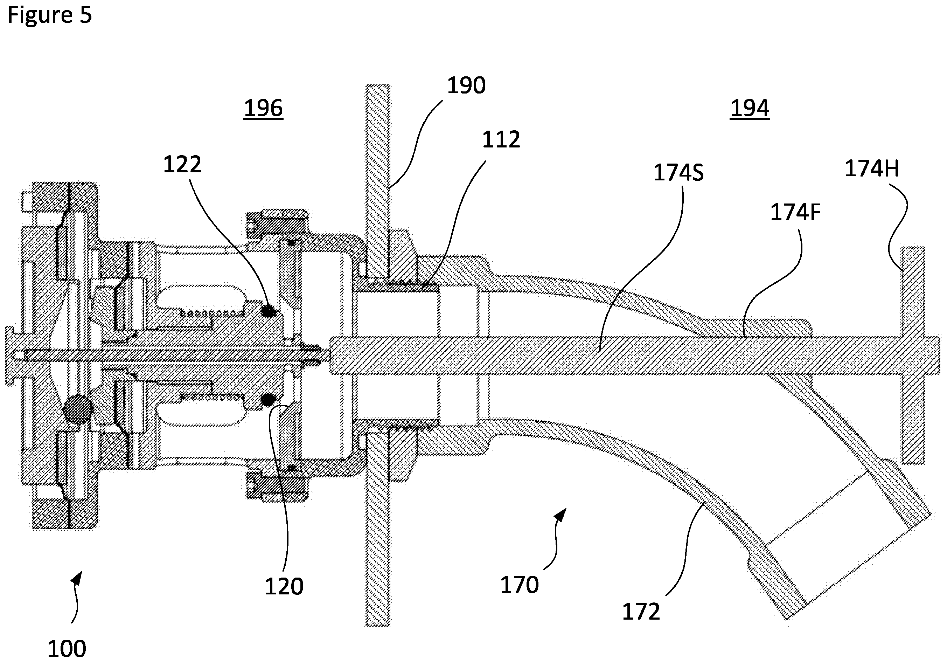

In the event that a fuel tank rolls over onto its side, before the tank can be moved, it is necessary to drain the liquid fuel from the fuel tank that is above the level of valve, before a hatch can be opened to pump out the remaining fuel from the tank. Figure 5 illustrates a draining nozzle 170 connected to the valve 100. The draining nozzle 170 has a draining pipe 172 that connects to the venting port 112 of the valve 100 and a tap. The tap has a shaft 174S that projects from the centre of the coupling to the venting port 112, and which is rotatably held in a threaded fitting 174F. In use, the head 174H of the shaft 174S is turned, causing the tap shaft 174S to project further out of the pipe 172, and to bear against the end of the valve mechanism (e.g. bearing against the end of valve shaft 128S), forcing open the valve seal, against the pressure of the fuel against the second plunger 128.

The arrangement by which the seal of the valve opens by an inward movement, relative to the wall of the tank, enables the draining nozzle and a secondary draining tank (not shown) to be connected to the valve without fuel leaking out of the tank, and then enables the draining nozzle tap-mechanism to force open the seal and to drain off fuel into the secondary draining tank in a safe and controlled manner.

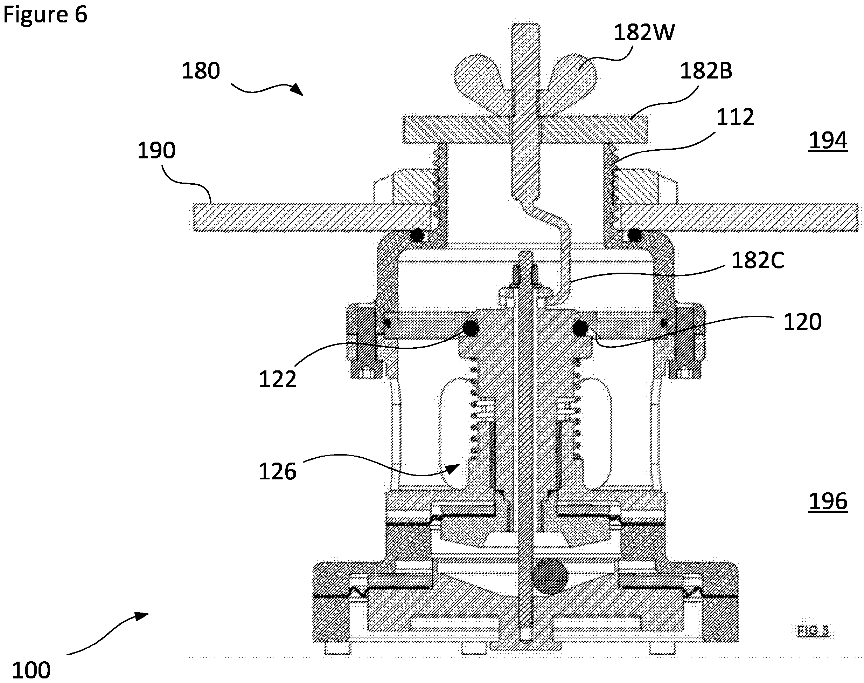

For scheduled testing of the fuel tank 190, the valve 100 may be removed and tested separately, and replaced before the tank is tested under relatively high pressure (e.g. 500mBar for 10min), during which the valve 100 can be locked closed. Figure 6 shows a locking tool 180, with a body 182B that mounts onto the venting outlet 112, with a claw 182C projecting into the venting port 112 and engaging with the valve mechanism (e.g. engaging with the end of the first plunger 126). In use, the claw 182C is drawn out of the venting outlet 112 (e.g. by rotation of a screw threaded wingnut 182W engaged with the claw), pulling the valve mechanism into a locked closed position.

The ability to lock the previously tested valve into a closed position enables the integrity of the fuel tank to be tested to high pressure, without requiring the use of a blanking plate during the high pressure test and subsequent re-fitting and re-testing at a low pressure once the valve has been replaced. This may reduce the time, complexity and cost of scheduled tank testing. This may also reduce the risk of false negative results due to leakage around the blanking plate, and reduce the risk of undetected leakage around the re-fitted valve.

In normal use, the free movement of the first and second plungers 126, 128 may be visually inspected by pressing down through the venting port 112 against each plunger.

In normal use, the venting port 112 may be protected from the ingress of dirt by the provision of a removable breathable cap, e.g. a foam cap.

In the illustrated valve, in the rollover configuration the seal has been jammed closed by the use of a jamming ball 142 that is jammed between the convergent opposed surfaces of the reference chamber 136. Alternatively, a weighted pendulum (not shown) may be suspended from the second plunger 128, resulting a small net upwards closure force on the seal when the valve 100 is in the upright orientation shown in Figure 1A. However, in the event of a rollover, when the rest of the valve rotates, the pendulum will continue to hang downwardly, with a smaller or zero part of its weight acting to oppose the action of the closure spring, which will consequently more firmly close the seal, even before the additional pressure of liquid fuel presses upon the second plunger.

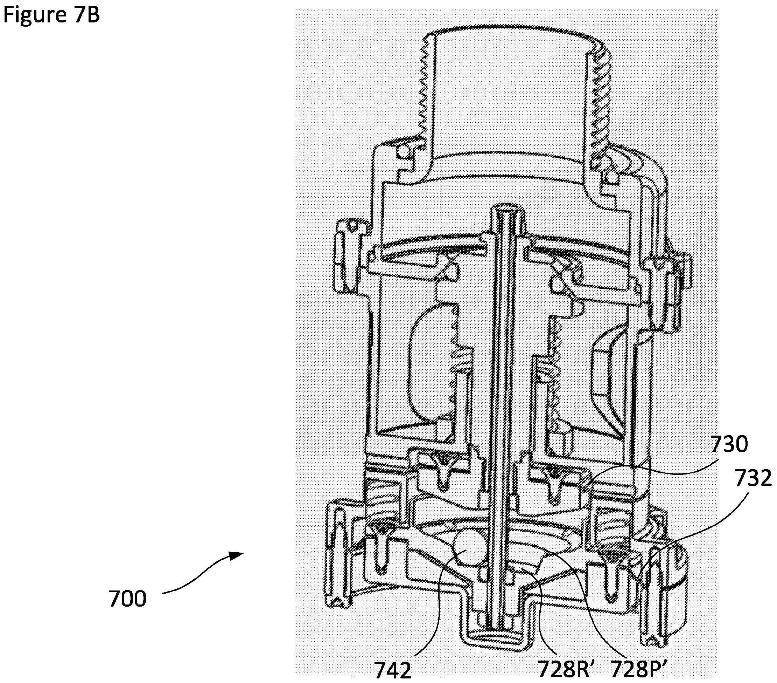

Figures 7A shows a cut-away view of a second fuel tank pressure relief valve 700 in a closed, rest configuration, and Figure 7B shows a perspective, cut-away view of the fuel tank pressure relief valve 700 of Figure 7A.

The construction of the second valve 700 corresponds closely with that of the valve 100 illustrated in Figure 1A. Like features are correspondingly numbered, albeit incremented by 600. Features of difference from valve 100 are indicated by different numbers, or the addition of a prime after the number (e.g. shaft 728S' differs from shaft 128S, as described).

The second valve 700 has a housing 710 within which a first plunger 726 and second plunger 728 are slideable mounted on corresponding diaphragm sections 726D and 728D, and in the ordinary operating configuration of the valve control the opening of a seal for relieving internal pressure above a first threshold differential pressure and below a second threshold differential pressure, and reclosing the valve when the internal pressure is between the thresholds.

In the second valve 700, the path by which external pressure (e.g. ambient atmospheric pressure) is coupled to the reference chamber 736 differs from valve 100. In valve 700, the shaft 728S' is a hollow tube, along which the external pressure balancing conduit 734' extends, being open at the upper end (proximate the travel limiter 728T), and opens at the opposed, lower end into an additional chamber 754 provided within the hollow second diaphragm portion 728D. Apertures 756 are provided in the concave surface 728C of the second plunger 728 (facing into the reference chamber 736), which communicate between the additional chamber 754 and the reference chamber. The use of a hollow tubular shaft 728S' can provide an external pressure balancing conduit 734' that may be more easily manufactured and which is more reliable in use. In an alternative arrangement, the tubular shaft 728S' may be provided with one or more apertures through its wall for providing fluid communication between the reference chamber 736 and the venting port 712.

In the case that the internal pressure exceeds an over-pressure threshold, the functioning of the second valve 700 in the over-pressure open configuration closely corresponds with that described for the first valve 100 and illustrated in Figure 2, which the pressure difference across the first diaphragm causing the first plunger 726 to move against the bias of spring 740 to open the seal. However, the second valve 700 differs from the first valve 100 by the provision of springs 758 between the housing 710 and the second plunger 728. In the rest configuration of the valve 700 the springs 758 may be relaxed (i.e. under neither compression or tension). In the over-pressure open configuration the second plunger 728 is pushed towards the closure direction, with its travel limited by bearing against the springs 758, without inhibiting movement of the first plunger 726. In the under-pressure open configuration the second plunger 728 is drawn away from the closure direction, with its travel limited by the travel limiter 728T'. The travel limiter 728T' may be adjustable to limit the relative travel of the first plunger 726 and second plunger 728 to control the separation between their respective convex and concave surfaces 726C and 728C in the ordinary use (i.e. not in rollover, draining or testing configurations). In the case that the internal pressure falls beneath an under-pressure threshold, the functioning of the second valve 700 corresponds with that described for the first valve 100 and illustrated in Figure 3, causing the second plunger 728 to move in the opening direction, bearing against the first plunger 726, which is drawn in the opening direction to open the seal.

The reference chamber 736, between the first diaphragm section 726D of the first plunger 726 and the second diaphragm section 728D of the second plunger 728, is provided with a rollover protection mechanism. In the illustrated valve 700, the reference chamber 736 has a non-constant depth (in the direction parallel to the shaft 728S') within which a jamming ball 742 is provided. In particular, the separation between the first diaphragm section 726D of the first plunger and the second diaphragm section 728D of the second plunger 728 is greater in the centre of the reference chamber 736 (e.g. adjacent the shaft 728S') than at the periphery of the reference chamber. In the illustrated valve 700, facing into the reference chamber 736, the diaphragm section 728D of the second plunger 728 is provided with a concave surface 728C (e.g. a first conical surface). The concave surface 728C may have a slope of 20 degrees at least proximate the edge 736E of the reference chamber 736. In ordinary use, the valve 700 is orientated with the concave surface 728C facing upwards, as shown in Figure 7A, and under the force due to gravity, the jamming ball 742 rests at a low point, spaced away from the edge of the reference chamber 736 (e.g. centrally, adjacent the shaft 728S). The depth of the reference chamber 736 is smaller at the edge of the reference chamber. Facing into the reference chamber 736, the convex surface 726C of the first diaphragm section 726D is convergent with the facing concave surface 728C, towards the edge 736E of the reference chamber 736 (e.g. flat or provided with a less steeply sloped surface, e.g. conical surface 726C). Further, in the illustrated valve 700, facing into the reference chamber 736, the surface of the first diaphragm section 726D is provided with a recess 726R, spaced apart from the edge 736E of the reference chamber.

Figures 7A and 7B illustrate a configuration of the reference chamber 736 and jamming ball 742 in the closed rest configuration, and the over-pressure open and under-pressure open configurations are similar to those illustrated for the first valve 100 in Figures 2 and 3.

However, the reference chamber 736 of the second valve 700 differs from the reference chamber 136 of the first valve 100 with respect to the location of the recess 728R', which is provided in the concave surface 728C of the second diaphragm section 728D, rather than in the convex surface 726C. This difference promotes localisation of the jamming ball 742 adjacent the shaft 728S', rather than roaming freely around within the reference chamber 736, during use in the conventional (upright) orientation. Further, by the force due to gravity, when resting on the concave surface 728C, the jamming ball 742 would roll back towards the recess 728R' in the event that it should escape the recess. In the event of over-pressure within the tank, the jamming ball 742 would remain within the recess 728R', to allow unhindered movement of the first plunger 726.

The reference chamber 736 of the second valve 700 also differs from the reference chamber 136 of the first valve 100 by the provision of an annular groove 728G' in the concave surface 728C of the second diaphragm section 728D, adjacent the edge 736E of the reference chamber 736. Alternatively, or additionally, the annular groove (not shown) may be provided in the convex surface of the first diaphragm section. In a further alternative, a plurality of concentric annular grooves (not shown) may be provided in the facing concave and/or convex surfaces of the diaphragm sections 726D and 728D, distributed at radii that lie between the periphery 728P' of the recess 728R' and the edge 736E of the reference chamber 736.

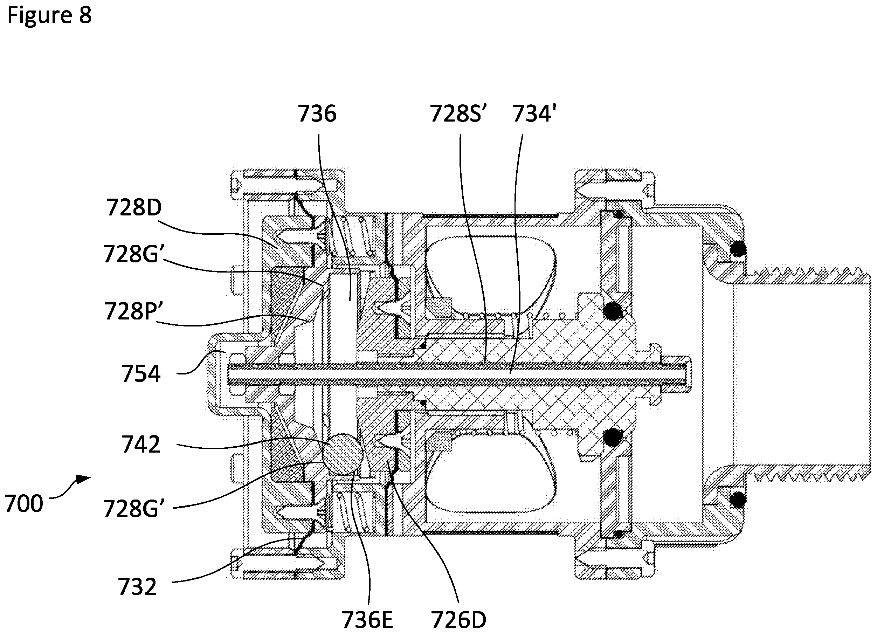

Figure 8 illustrates the arrangement of the reference chamber 736 and jamming ball 742 in a 90 degree rollover configuration, and is generally similar to the corresponding configuration of the first valve 100 in Figure 4. This orientation of the valve 700 would arise if a fuel tanker rolled onto its side in a road-traffic accident. When the valve 700 is rotated away from the normal use configurations by more than a jamming threshold angle (e.g. corresponding to the slope of the periphery 728P' of the recess 728R' in the concave surface 728C, the jamming ball 742 rolls away out of the recess (its typical rest position in the normal use configurations), towards the edge 736E of the reference chamber 736. The arrangement of the springs 758 maintains a minimum gap between the first diaphragm section 726D and the second diaphragm section 728D that is slightly larger than the diameter of the jamming ball 742, when the valve 700 is exposed solely to gas pressures, and under those conditions the jamming ball 742 is able to roll to the edge 736E. However, when the tank rolls sufficiently that the valve 700 becomes submerged in liquid fuel, the valve is exposed to an elevated pressure, and the larger area of the second diaphragm than the first diaphragm forces the second plunger 728 against the jamming ball 742, preventing the first plunger 726 from moving and opening the seal between the first and second sealing surfaces 720, 722, and additionally compressing the springs 758. The jammed jamming ball 742 rests within the annual groove 728, which prevents the jamming ball from being squeezed out towards the shaft 728S', and assists with securely locking the seal into the closed configuration. Where annular grooves are provided on both facing surfaces 726C and 728C, they may be arranged at corresponding radii, so that a corresponding pair of facing annular grooves may receive opposite sides of the jamming ball 742. Radially from the shaft 728S', the one or more grooves may have a depth profile with a radius of curvature equal to the radius of the jamming ball 742.

The second valve 700 may be drained and tested in the same manners as has been described for the first valve 100 and illustrated in Figures 5 and 6.

Throughout the description and claims of this specification, the words "comprise" and "contain" and variations of them mean "including but not limited to", and they are not intended to (and do not) exclude other moieties, additives, components, integers or steps.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A fuel tank (190) pressure relief valve (100) for relieving a pressure difference between the interior pressure of a fuel tank and an exterior pressure external to the fuel tank, comprising:
first (120) and second (122) sealing surfaces for mating to form an openable seal between the interior (196) and exterior (194) of the fuel tank;
a housing (110) provided with the first sealing surface;
a first plunger (126);
a second plunger (128); and
a venting port (112),
wherein the first plunger is provided with the second sealing surface, wherein the first plunger is flexibly sealed to the housing by a first membrane (130) providing a first diaphragm area to open the seal formed between the first and second sealing surfaces when the interior pressure is above the exterior pressure by more than a first threshold differential pressure;
wherein the second plunger is flexibly sealed to the housing by a second membrane (132) providing a second diaphragm area that is greater than the first diaphragm area; and
wherein the first plunger is biased towards a closed configuration of the first and second sealing surfaces by a resiliently deformable member to maintain the seal formed between the first and second sealing surfaces in a closed configuration when the interior pressure is not above the exterior pressure by more than the first threshold differential pressure and is not lower than the exterior pressure by more than a second threshold differential pressure,
**characterized in that**
the second plunger is engaged with the first plunger to bias the first plunger towards an open configuration of the first and second sealing surfaces when the interior pressure is lower than the exterior pressure to open the seal formed between the first and second sealing surfaces when the interior pressure is lower than the exterior pressure by more than the second threshold differential pressure.

2. The fuel tank pressure relief valve of claim 1, wherein a reference chamber (136) is provided between the first diaphragm and the second diaphragm that is open to the venting port.

3. The fuel tank pressure relief valve of claim 2, wherein a response chamber (150) is provided on the opposite side of the first diaphragm from the reference chamber, and the response chamber is in fluid communication with the interior of the fuel tank.

4. The fuel tank pressure relief valve of claim 3, wherein the response chamber is in fluid communication with the interior of the fuel tank through a flow constricting conduit (152).

5. The fuel tank pressure relief valve of any preceding claim, wherein the second plunger comprises a spindle (128S) slideably engaged through an exterior pressure conduit (134) of the first plunger, and the reference chamber is in fluid communication with the venting port through the exterior pressure conduit or wherein the second plunger comprises a hollow tube (728S') providing exterior pressure conduit, and the reference chamber is in fluid communication with the venting port through the exterior pressure conduit.

6. The fuel tank pressure relief valve of any preceding claim, wherein the first diaphragm area is larger than the area within the sealing surface of the openable seal.

7. The fuel tank pressure relief valve of any preceding claim, wherein the first plunger is resiliently biased into the closed configuration, wherein the first plunger is slideably engaged with the housing and/or wherein the second plunger is slideably engaged with the first plunger.

8. The fuel tank pressure relief valve of claim 7, wherein the second plunger comprises a spindle slideably engaged through the first plunger.

9. The fuel tank pressure relief valve of any preceding claim, wherein a surface of the second plunger facing the first plunger is a concave surface,
wherein a reference chamber is provided between the first diaphragm and the second diaphragm and the reference chamber is less deep proximate the edge of the reference chamber than in a central region of the reference chamber, and
a jamming ball is provided in the reference chamber with a larger diameter than the depth of the reference chamber adjacent the edge of the reference chamber to maintain the seal formed between the first and second sealing surfaces in a closed configuration when the relief valve is inclined by more than a threshold angle with respect to the earth's gravitational pull.

10. The fuel tank pressure relief valve of claim 9, wherein the surface of the second plunger facing the first plunger slopes by up to 20 degrees on each side of a central region and/or wherein a surface of the first plunger facing the second plunger comprises a recessed central region (126R) and/or wherein a surface of the second plunger facing the first plunger comprises a recessed central region (728R').

11. The fuel tank pressure relief valve of any one of claim 9 or claim 10, wherein a surface of the first plunger and/or a surface of the second plunger facing into the reference chamber comprises an annular groove proximate the periphery of the reference chamber.

12. The fuel tank pressure relief valve of any preceding claim, wherein the second sealing surface comprises a resiliently deformable ring.

13. The fuel tank pressure relief valve of claim 12, wherein the resiliently deformable ring has a low friction coating.

14. The fuel tank pressure relief valve of any preceding claim, wherein the first sealing surface is provided on a removable baffle (110A) sandwiched between separable housing parts.

15. A fuel tank or a fuel tanker comprising one or more fuel tank pressure relief valves of any preceding claim.

## Patentansprüche

1. Kraftstofftank (190) -Druckbegrenzungsventil (100) zum Entlasten einer Druckdifferenz zwischen dem Innendruck eines Kraftstofftanks und einem Außendruck außerhalb des Kraftstofftanks, umfassend:
eine erste (120) und eine zweite (122) Dichtfläche zum Zusammenpassen, um eine öffnungsfähige Dichtung zwischen dem Inneren (196) und dem Äußeren (194) des Kraftstofftanks zu bilden;
ein Gehäuse (110), das mit der ersten Dichtfläche versehen ist;
einen ersten Kolben (126);
einen zweiten Kolben (128); und
eine Entlüftungsöffnung (112),
wobei der erste Kolben mit der zweiten Dichtfläche versehen ist, wobei der erste Kolben durch eine erste Membran (130) flexibel mit dem Gehäuse abgedichtet ist, die einen erste Membranbereich bereitstellt, um die zwischen der ersten und zweiten Dichtfläche gebildete Dichtung zu öffnen, wenn der Innendruck um mehr als einen ersten Schwellendifferenzdruck über dem Außendruck liegt;
wobei der zweite Kolben durch eine zweite Membran (132) flexibel mit dem Gehäuse abgedichtet ist, die einen zweiten Membranbereich bereitstellt, der größer als der erste Membranbereich ist; und
wobei der erste Kolben durch ein elastisch verformbares Element in Richtung einer geschlossenen Konfiguration der ersten und zweiten Dichtfläche vorgespannt ist, um die zwischen der ersten und der zweiten Dichtfläche gebildete Dichtung in einer geschlossenen Konfiguration zu halten, wenn der Innendruck nicht um mehr als der erste Schwellendifferenzdruck über dem Außendruck liegt und nicht um mehr als einen zweiten Schwellendifferenzdruck niedriger als der Außendruck ist,
**dadurch gekennzeichnet, dass** der zweite Kolben mit dem ersten Kolben in Eingriff steht, um den ersten Kolben in Richtung einer offenen Konfiguration der ersten und zweiten Dichtfläche vorzuspannen, wenn der Innendruck niedriger als der Außendruck ist, um die zwischen der ersten und zweiten Dichtfläche gebildete Dichtung zu öffnen, wenn der Innendruck um mehr als den zweiten Schwellendifferenzdruck niedriger als der Außendruck ist.

2. Kraftstofftank-Druckbegrenzungsventil nach Anspruch 1, wobei eine Referenzkammer (136) zwischen der ersten Membran und der zweiten Membran bereitgestellt ist, die zur Entlüftungsöffnung offen ist.

3. Kraftstofftank-Druckbegrenzungsventil nach Anspruch 2, wobei eine Reaktionskammer (150) auf der von der Referenzkammer aus gegenüberliegenden Seite der ersten Membran bereitgestellt ist und die Reaktionskammer in Fluidverbindung mit dem Inneren des Kraftstofftanks steht.

4. Kraftstofftank-Druckbegrenzungsventil nach Anspruch 3, wobei die Reaktionskammer durch eine Strömungsverengungsleitung (152) mit dem Inneren des Kraftstofftanks in Fluidverbindung steht.

5. Kraftstofftank-Druckbegrenzungsventil nach einem der vorhergehenden Ansprüche, wobei der zweite Kolben eine Spindel (128S) umfasst, die durch eine äußere Druckleitung (134) des ersten Kolbens verschiebbar in Eingriff steht, und die Referenzkammer durch die äußere Druckleitung mit der Entlüftungsöffnung in Fluidverbindung steht oder wobei der zweite Kolben ein Hohlrohr (728S') umfasst, das eine äußere Druckleitung bereitstellt, und die Referenzkammer durch die äußere Druckleitung mit der Entlüftungsöffnung in Fluidverbindung steht.

6. Kraftstofftank-Druckbegrenzungsventil nach einem der vorhergehenden Ansprüche, wobei der erste Membranbereich größer als der Bereich innerhalb der Dichtfläche der öffnungsfähigen Dichtung ist.

7. Kraftstofftank-Druckbegrenzungsventil nach einem der vorhergehenden Ansprüche, wobei der erste Kolben elastisch in die geschlossene Konfiguration vorgespannt ist, wobei der erste Kolben verschiebbar mit dem Gehäuse in Eingriff steht und/oder wobei der zweite Kolben verschiebbar mit dem ersten Kolben in Eingriff steht.

8. Kraftstofftank-Druckbegrenzungsventil nach Anspruch 7, wobei der zweite Kolben eine Spindel umfasst, die durch den ersten Kolben verschiebbar in Eingriff steht.

9. Kraftstofftank-Druckbegrenzungsventil nach einem der vorhergehenden Ansprüche, wobei eine dem ersten Kolben zugewandte Oberfläche des zweiten Kolbens eine konkave Oberfläche ist,
wobei eine Referenzkammer zwischen der ersten Membran und der zweiten Membran bereitgestellt ist und die Referenzkammer weniger tief in der Nähe des Randes der Referenzkammer ist als in einem zentralen Bereich der Referenzkammer, und eine Klemmkugel in der Referenzkammer mit einem größeren Durchmesser als die Tiefe der Referenzkammer neben dem Rand der Referenzkammer bereitgestellt ist, um die zwischen der erste und zweite Dichtfläche gebildete Dichtung in einer geschlossenen Konfiguration zu halten, wenn das Druckbegrenzungsventil um mehr als einen Schwellenwinkel in Bezug auf die Erdanziehungskraft geneigt ist.

10. Kraftstofftank-Druckbegrenzungsventil nach Anspruch 9, wobei die dem ersten Kolben zugewandte Oberfläche des zweiten Kolbens auf jeder Seite eines zentralen Bereichs um bis zu 20 Grad geneigt ist und/oder wobei eine dem zweiten Kolben zugewandte Oberfläche des ersten Kolbens einen vertieften zentraler Bereich (126R) umfasst und/oder wobei eine dem ersten Kolben zugewandte Oberfläche des zweiten Kolbens einen vertieften zentralen Bereich (728R') umfasst.

11. Kraftstofftank-Druckbegrenzungsventil nach einem von Anspruch 9 oder Anspruch 10, wobei eine Oberfläche des ersten Kolbens und/oder eine Oberfläche des zweiten Kolbens, die in die Referenzkammer zeigt, eine ringförmige Nut nahe dem Umfang der Referenzkammer umfasst.

12. Kraftstofftank-Druckbegrenzungsventil nach einem der vorhergehenden Ansprüche, wobei die zweite Dichtfläche einen elastisch verformbaren Ring aufweist.

13. Kraftstofftank-Druckbegrenzungsventil nach Anspruch 12, wobei der elastisch verformbare Ring eine reibungsarme Beschichtung aufweist.

14. Kraftstofftank-Druckbegrenzungsventil nach einem der vorhergehenden Ansprüche, wobei die erste Dichtfläche auf einer entfernbaren Trennwand (110A) bereitgestellt ist, die zwischen trennbaren Gehäuseteilen angeordnet ist.

15. Kraftstofftank oder Kraftstofftanker, umfassend ein oder mehrere Kraftstofftank-Druckbegrenzungsventile nach einem der vorhergehenden Ansprüche.

## Revendications

1. Soupape de surpression (100) de réservoir de carburant (190) pour réduire une différence de pression entre la pression intérieure d'un réservoir de carburant et une pression extérieure à l'extérieur du réservoir de carburant, comprenant :
des première (120) et seconde (122) surfaces d'étanchéité destinées à s'accoupler pour former un joint ouvrable entre l'intérieur (196) et l'extérieur (194) du réservoir de carburant ;
un boîtier (110) muni de la première surface d'étanchéité ;
un premier piston (126) ; un deuxième piston (128) ; et
un orifice de ventilation (112), dans laquelle le premier piston est muni de la seconde surface d'étanchéité, dans laquelle le premier piston est scellé de manière flexible au boîtier par une première membrane (130) fournissant une première zone de diaphragme pour ouvrir le joint formé entre la première et la seconde surfaces d'étanchéité lorsque la pression intérieure est supérieure à la pression extérieure de plus qu'une première pression différentielle de seuil ; dans laquelle le deuxième piston est scellé de manière flexible au boîtier par une deuxième membrane (132) fournissant une deuxième zone de diaphragme qui est supérieure à la première zone de diaphragme ; et
dans laquelle le premier piston est rappelé vers une configuration fermée des première et seconde surfaces d'étanchéité par un élément élastiquement déformable pour maintenir le joint formé entre les première et seconde surfaces d'étanchéité dans une configuration fermée lorsque la pression intérieure n'est pas supérieure à la pression extérieure de plus que la première pression différentielle de seuil et n'est pas inférieure à la pression extérieure de plus qu'une deuxième pression différentielle de seuil, **caractérisé en ce que** le deuxième piston est engagé avec le premier piston pour rappeler le premier piston vers une configuration ouverte des première et deuxième surfaces d'étanchéité lorsque la pression intérieure est inférieure à la pression extérieure pour ouvrir le joint formé entre les première et seconde surfaces d'étanchéité lorsque la pression intérieure est inférieure à la pression extérieure de plus que la deuxième pression différentielle de seuil.

2. Soupape de surpression de réservoir de carburant selon la revendication 1, dans laquelle une chambre de référence (136) est prévue entre le premier diaphragme et le deuxième diaphragme qui est ouvert sur l'orifice de ventilation.

3. Soupape de surpression du réservoir de carburant selon la revendication 2, dans laquelle une chambre de réponse (150) est prévue sur le côté opposé du premier diaphragme par rapport à la chambre de référence, et la chambre de réponse est en communication fluidique avec l'intérieur du réservoir de carburant.

4. Soupape de surpression de réservoir de carburant selon la revendication 3, dans laquelle la chambre de réponse est en communication fluidique avec l'intérieur du réservoir de carburant par l'intermédiaire d'un conduit de restriction d'écoulement (152).

5. Soupape de surpression de réservoir de carburant selon l'une quelconque des revendications précédentes, dans laquelle le deuxième piston comprend une tige (128S) engagée de manière coulissante à travers un conduit de pression extérieur (134) du premier piston, et la chambre de référence est en communication fluidique avec l'orifice de ventilation à travers le conduit de pression extérieur ou dans laquelle le deuxième piston comprend un tube creux (728S') fournissant un conduit de pression extérieur, et la chambre de référence est en communication fluidique avec l'orifice de ventilation à travers le conduit de pression extérieur.

6. Soupape de surpression de réservoir de carburant selon l'une quelconque des revendications précédentes, dans laquelle la première zone de diaphragme est plus grande que la zone à l'intérieur de la surface d'étanchéité du joint ouvrable.

7. Soupape de surpression de réservoir de carburant selon l'une quelconque des revendications précédentes, dans laquelle le premier piston est rappelé élastiquement dans la configuration fermée, dans laquelle le premier piston est engagé de manière coulissante avec le boîtier et / ou dans laquelle le deuxième piston est engagé de manière coulissante avec le premier piston.

8. Soupape de surpression de pression de réservoir de carburant selon la revendication 7, dans laquelle le deuxième piston comprend une tige engagée de manière coulissante à travers le premier piston.

9. Soupape de surpression de réservoir de carburant selon l'une quelconque des revendications précédentes, dans laquelle une surface du deuxième piston faisant face au premier piston est une surface concave, dans laquelle une chambre de référence est prévue entre le premier diaphragme et le deuxième diaphragme et la chambre de référence est moins profonde à proximité du bord de la chambre de référence que dans une région centrale de la chambre de référence, et une bille de blocage est prévue dans la chambre de référence avec un diamètre plus grand que la profondeur de la chambre de référence adjacente au bord de la chambre de référence pour maintenir le joint formé entre les première et seconde surfaces d'étanchéité dans une configuration fermée lorsque la soupape de décharge est inclinée de plus qu'un angle de seuil par rapport à la traction gravitationnelle de la Terre.

10. Soupape de surpression de réservoir de carburant selon la revendication 9, dans laquelle la surface du deuxième piston faisant face au premier piston est inclinée jusqu'à 20 degrés de chaque côté d'une région centrale et / ou dans laquelle une surface du premier piston faisant face au deuxième piston comprend une région centrale évidée (126R) et / ou dans laquelle une surface du deuxième piston faisant face au premier piston comprend une région centrale évidée (728R').

11. Soupape de surpression de réservoir de carburant selon l'une quelconque des revendications 9 ou 10, dans laquelle une surface du premier piston et / ou une surface du deuxième piston faisant face à la chambre de référence comprend une rainure annulaire à proximité de la périphérie de la chambre de référence.

12. Soupape de surpression de réservoir de carburant selon l'une quelconque des revendications précédentes, dans laquelle la deuxième surface d'étanchéité comprend un anneau élastiquement déformable.

13. Soupape de surpression de réservoir de carburant selon la revendication 12, dans laquelle la bague élastiquement déformable a un revêtement à faible friction.

14. Soupape de surpression de réservoir de carburant selon l'une quelconque des revendications précédentes, dans laquelle la première surface d'étanchéité est prévue sur un déflecteur amovible (110A) pris en sandwich entre des parties de boîtier séparables.

15. Réservoir de carburant ou citerne de carburant comprenant une ou plusieurs soupapes de surpression de réservoir de carburant selon l'une quelconque des revendications précédentes.
